# EUROPÄISCHE PATENTSCHRIFT

(11) **EP 1 160 556 B1**
(45) Veröffentlichungstag und Bekanntmachung des Hinweises auf die Patenterteilung: **24.01.2007**
(21) Anmeldenummer: 01108744.2
(22) Anmeldetag: 06.04.2001
(51) Int. Cl.: G01L 3/10, G01L 1/16, G01S 13/02

(54) **System zur Messung von Drehmoment, Axial- und/oder Querkraft und Temperatur bei einer Achse oder drehbaren Welle, sowie Verfahren zur Prozesssteuerung bei einem solchen System**
System for the measurement of torque, axial and/or lateral force and temperature of an axle or a rotatable shaft, and method of process control for such a system
Système pour mesurer un couple de torsion, une force axiale et/ou latérale et la temperature d'un axe rotatif ou d'un arbre rotatif, et procédé de commande de processus d'un tel système

(30) Priorität: 16.05.2000 DE 10023961
(43) Veröffentlichungstag der Anmeldung: 05.12.2001
(73) Patentinhaber: Sew-Eurodrive GmbH & Co. KG, 76646 Bruchsal (DE)
(72) Erfinder: Bader, Antonius, 76646 Bruchsal (DE); Müller, Mathias, 76437 Rastatt (DE); Bolz, Heinrich, Dr., 76689 Karlsdorf-Neuthard (DE); Denefleh, Roland, 64683 Einhausen (DE); Leibold, Hubert, 76694 Forst (DE); Stephany, Klaus, 76646 Bruchsal (DE); Zimmermann, Heinrich, 76646 Bruchsal (DE)

(56) Entgegenhaltungen:
- EP-A- 0 570 066
- DE-A- 19 719 921
- GB-A- 1 461 138
- US-A- 5 585 571
- BALDAUF W: "FREQUENZANALOGE DREHMOMENTMESSUNG MIT OBERFLAECHENWELLEN- RESONATOREN" TECHNISCHES MESSEN TM, R.OLDENBOURG VERLAG. MUNCHEN, DE, Bd. 58, Nr. 9, 1. September 1991 (1991-09-01), Seiten 329-334, XP000262330 ISSN: 0171-8096

## Beschreibung

Die Erfindung betrifft ein System zur Messung physikalischer Größen bei einer Achse oder drehbaren Welle und ein Verfahren zur Prozesssteuerung.

Aus den Veröffentlichungen W. Baldauf, VDI-Forschrittsbereichte, Reihe 8, Nr. 380, 1994 und J. Michel, Dissertation TU München 1996 sind Systeme zur Messung einer physikalischen Größe wie Drehmoment bei einer drehbaren Welle bekannt. Zu den physikalischen Größen zählen beispielhaft auch die Axial- und/oder Querkraft und das Drehmoment, welche auf die drehbare Welle übertragen werden. Unter Querkraft wird in dieser Schrift die zur Achse der drehbaren Welle radial wirkende Kraftkomponente, also die Radialkraft, verstanden. Unter Axialkraft wird in dieser Schrift die zur Achse der drehbaren Welle axial wirkende Kraftkomponente verstanden.

Zur Messung solcher physikalischer Größen sind vielfältige Methoden und Verfahren bekannt. Gemeinsam ist allen, dass sie aufwendig und kostspielig sind. Diejenigen Systeme, die einen oder mehrere Sensoren auf einer drehbaren Welle aufweisen, benötigen eine Energieversorgung für den mitdrehbaren Teil der Elektronik. Teilweise werden hierfür Batterien eingesetzt, die nach einer gewissen Betriebszeit ausgetauscht werden müssen und viel Platz benötigen. Darüber hinaus stellen insbesondere Batterien Unwucht erzeugende Massen dar, die durch entsprechend aufwendige Gegenmaßnahmen kompensiert werden müssen. Außerdem benötigt der mitdrehbare Teil der Elektronik ebenfalls viel Platz. Hohe elektrische und/oder magnetische Felder können zusätzlich den Einsatz erschweren. Außerdem sind Kontakte, beispielsweise für Batterien, vorhanden, die in Ausnahmefällen zu Funkenbildung führen können. Daher sind explosionsgeschützte Ausführungen nur aufwendig fertigbar.

Aus der Veröffentlichung tm - Technisches Messen 58, September 1991, Nr. 9, W. Baldauf: "Frequenzanaloge Drehmomentmessung mit Oberflächenwellen-Resonatoren", Seiten 329 - 334, München, DE, ist eine Erfassung des Drehmoments an einer rotierenden Welle mittels OFW-Sensoren bekannt.

Aus der EP 0 570 066 ist ein Dehnungstransformator zur Drehmomentmessung einer Welle bekannt, bei dem der Sensor auf einem Dehnungstransformator 11 vorgesehen ist, der nur in seinen axialen Endbereichen an der Welle anliegt.

Der Erfindung liegt daher die Aufgabe zugrunde, ein System zur Messung von Drehmoment, Axial- und/oder Querkraft und Temperatur bei einer drehbaren Welle und ein Verfahren zur Prozesssteuerung zu schaffen unter Vermeidung der vorgenannten Nachteile. Insbesondere soll das System kostengünstig herstellbar sein und in bestehende Baureihen ohne großen Aufwand integrierbar sein. Bei dem Verfahren zur Prozesssteuerung soll die industrielle Anlage kostengünstig und insbesondere serienmäßig mit komplexen Verfahren in Abhängigkeit gemessener Größen betreibbar sein.

Erfindungsgemäß wird die Aufgabe
- bei dem System nach den in Anspruch 1 angegebenen Merkmalen
- und bei dem Verfahren zur Prozesssteuerung nach den in Anspruch 25 angegebenen Merkmalen gelöst.

Wichtige Merkmale der Erfindung bei dem System nach Anspruch 1 sind, dass eine erste stationäre elektronische Schaltung mittels elektromagnetischer Wellen und/oder elektromagnetischer Wellenzüge mit einem Sensor Energie und Informationen mindestens jeweils unidirektional zumindest zeitweise austauscht, und dass der Sensor mit der drehbaren Welle derart verbunden oder angekoppelt ist, dass vom Sensor zur ersten elektronischen Schaltung übertragene elektromagnetische Wellen und/oder elektromagnetische Wellenzüge Informationen über die Werte der physikalischen Größen umfassen, und dass der Sensor mindestens ein Antennenteil umfasst und die erste stationäre elektronische Schaltung mit mindestens einem weiteren Antennenteil verbunden ist, wobei zur Verbindung des Sensors und der drehbaren Welle ein Zwischenstück zwischen Sensor und drehbarer Welle angeordnet ist

Wichtige Merkmale der Erfindung bei dem System nach Anspruch 2 sind, dass das System zur Messung des auf eine drehbare Welle übertragenen Drehmoments und/oder der in einer drehbaren Welle auftretenden Axial- und/oder Querkraft, eine erste stationäre elektronische Schaltung zum Aussenden und/oder Empfangen von Radarwellenzüge umfasst und einen mit der drehbaren Welle derart verbundenen OFW-Sensor, dass Informationen über die Werte des Drehmoments und/oder der Axial- und/oder Querkraft in den vom OFW-Sensor rückgestrahlten Radarechos enthalten sind.

Von Vorteil ist bei der Erfindung jeweils, dass das System berührungslos Energie und Informationen überträgt und auf der drehenden Welle keine Energieversorgung aus Batterien nötig ist. Außerdem ist der Platzbedarf äußerst gering und das System kostengünstig herstellbar. Insbesondere OFW-Sensoren sind auch in Umgebungen betreibbar mit hohen elektrischen und magnetischen Feldstärken. Darüber hinaus sind bei dem erfindungsgemäßen System vorteilhafterweise sowohl statische als auch dynamische Drehmomente, Axial- und/oder Querkräfte, Verformung als physikalische Größen messbar. Besonders vorteilhaft ist die Verwendung eines Zwischenstücks, da somit der Sensor an verschiedene Wellen anmontierbar und daher verwendbar ist.

Von Vorteil ist bei dem OFW-Sensor, dass er als Messfühler einen Quartz enthält, der langzeitstabil ist und eine große Empfindlichkeit aufweist. Außerdem wird vom OFW-Sensor ein quasidigitales Ausgangssignal ausgesandt und es ist keine mitdrehende Elektronik nötig. Daher ist auch der Platzbedarf sehr gering und der OFW-Sensor ist in die bestehenden Teile oder Komponenten ohne Maßänderung oder wesentliche Umkonstruktion anbaubar, anmontierbar oder integrierbar.

Bei einer weiteren erfindungsgemäßen Ausführungsform arbeitet der Sensor passiv, insbesondere umfasst er keine Batterie. Von Vorteil ist dabei, dass kein Energiespeicher nötig ist und auch nicht nach einer gewissen Betriebszeit ausgetauscht werden muss.

Bei einer weiteren erfindungsgemäßen Ausführungsform umfasst der Sensor Mittel zum Umwandeln elektromagnetischer Wellen, wie Radarwellen oder dergleichen, in akustische Wellen und antwortet auf eingestrahlte elektromagnetische Wellenzüge mit zeitverzögerten elektromagnetischen Wellenzügen, wobei die Zeitverzögerung von den physikalischen Größen oder deren Änderung beeinflusst ist. Von Vorteil ist dabei, dass diese beschriebenen Echos von Wellenzügen in ihrer Form und ihrer Zeitverzögerung Informationen über die genannten physikalischen Größen umfassen. Somit ist das System mit berührungsloses Energie- und Informationsübertragung realisiert.

Bei einer weiteren erfindungsgemäßen Ausführungsform umfasst der Sensor Mittel zum Umwandeln elektromagnetischer Wellen, wie Radarwellen oder dergleichen, in elektrischen Strom zur Versorgung einer elektrischen Schaltung des Sensors und die elektrische Schaltung umfasst Mittel zum Bestimmen der gennanten physikalischen Größen oder deren Änderung, und der Sensor sendet Informationen über die bestimmten Werte der physikalischen Größen oder deren Änderung mittels elektromagnetischer Wellen zurück. Von Vorteil ist dabei, dass mit einer oder mehreren Frequenzen Energie und Informationen über die Messwerte übertragbar sind.

Bei einer weiteren erfindungsgemäßen Ausführungsform umfasst der Sensor als Mittel zum Umwandeln elektromagnetischer Wellen eine Antenne, umfassend mindestens ein Antennenteil. Von Vorteil ist dabei, dass die Energie- und Informationsübertragung mittels elektromagnetischer Wellen ausführbar ist. Ein besonderer Vorteil ist dabei, dass bei Einsatz des erfindungsgemäßen Systems in metallischen Hohlräumen, wie im Innern des Getriebes oder dergleichen, insbesondere Radarwellen den gesamten Raum füllen und keine gerichtete Abstrahlung oder ein gerichteter Empfang vonnöten ist.

Bei einer weiteren erfindungsgemäßen Ausführungsform ist der Sensor ein OFW-Sensor. Von Vorteil ist dabei, dass ein robustes System einsetzbar ist, das insbesondere auch in Umgebungen hoher elektrischer und/oder magnetischer Feldstärken einsetzbar ist.

Bei der erfindungsgemäßen Ausführungsform sind die physikalischen Größen das mittels der drehbaren Welle übertragene Drehmoment, die auftretende Axial- und/oder Querkraft und/oder Verformung. Von Vorteil ist dabei, dass durch Weiterverarbeitung der gemessenen Werte Überwachungen bezüglich Lagerschäden, Abnutzungen oder anderer Schäden ausführbar sind und die Größen direkt an der drehbaren Welle gemessen werden. Außerdem sind die Messwerte vorteilhafterweise in einer Prozesssteuerung oder einem Diagnoseverfahren verwendbar. Insbesondere sind Drehmomentmesswerte in einer übergeordneten Drehmomentregelung verwendbar.

Bei einer weiteren erfindungsgemäßen Ausführungsform sind der Sensor oder mindestens Teile des Sensors in einer Bohrung oder Axialbohrung der drehbaren Welle eingebaut, und es ist mindestens ein Antennenteil an der Außenseite der drehbaren Welle angebracht. Von Vorteil ist dabei, dass kein weiterer Platzbedarf für das Anbringen des Sensors vonnöten ist und außerdem die Wellenoberfläche nicht wesentlich bearbeitet werden muss. Außerdem ist der Sensor nicht im Ölraum und somit nicht der Wirkung des Öls, insbesondere nicht der chemischen Wirkung und nicht der physikalischen Beeinflussung des Sensors, ausgesetzt.

Bei einer weiteren erfindungsgemäßen Ausführungsform ist der Sensor oder sind mindestens Teile des Sensors in die Bohrung oder Axialbohrung der drehbaren Welle mittels einer Patrone eingebaut, und mindestens ein Antennenteil ist an der Außenseite der drehbaren Welle angebracht ist. Zusätzlicher Vorteil ist dabei, dass der Einbau einfach, schnell und kostengünstig ausführbar ist.

Bei einer weiteren erfindungsgemäßen Ausführungsform wird der OFW-Sensor mit einer hohen Abtastrate zur Messung der genannten physikalischen Größen betrieben. Somit sind vorteilhafterweise sogar Schwingungsmessungen ermöglicht, insbesondere Messungen des hörbaren oder nicht mehr hörbaren Körperschalls.

Bei einer weiteren erfindungsgemäßen Ausführungsform zur Verbindung des Sensors und der drehbaren Welle ist ein Zwischenstück zwischen Sensor und drehbarer Welle angeordnet. Von Vorteil ist dabei, dass eine Ankoppelung mittels Zwischenstück eingesetzt wird, wobei das Zwischenstück an die jeweilige Welle anpassbar ist. Außerdem ist es kostengünstig, das möglichst einfach zu fertigende Zwischenstück zur Anpassung an die Welle zu verwenden, da eine Anpassung des Sensors oder eines Teils desselben, wie Sensorplättchen oder dergleichen, aufwendiger und kostspieliger ist.

Bei der erfindungsgemäßen Ausführungsform ist das Zwischenstück ein Adapter, der den Zwischenraum zwischen Sensor und drehbarer Welle füllt. Von Vorteil ist dabei, dass eine vollflächige Ankoppelung ausführbar ist, die die gesamte Verdrehung bei Verspannung der Welle auf den Sensor oder ein Sensorplättchen überträgt.

Bei einer weiteren erfindungsgemäßen Ausführungsform ist am Lager der drehbaren Welle einer Vorrichtung, einem Getriebe oder Motor, zumindest ein stationäres Antennenteil angebracht. Von Vorteil ist dabei, dass das stationäre Antennenteil sogar integrierbar ist in Teile des Lagers oder am Lager anmontiert ist. Im letzteren Fall ist das stationäre Antennenteil zusammen mit dem Lager fertigbar.

Bei einer weiteren erfindungsgemäßen Ausführungsform ist der Sensor derart flächig ausgebildet und es sind zwei, insbesondere zueinander senkrechte, Orientierungsrichtungen in der Fläche derart vorhanden, dass er Stauchung und Dehnung in einer oder zwei dieser Orientierungsrichtungen detektiert. Von Vorteil ist dabei, dass die vektoriellen Komponenten oder sogar die Komponenten eines Tensors zweiter Stufe für physikalische Größen bestimmbar und messbar sind. Insbesondere sind als physikalische Größen das auf die Welle übertragene Drehmoment und die in der Welle auftretende Axialkraft und/oder Querkraft im statischen und dynamischen Fall messbar.

Bei einer weiteren erfindungsgemäßen Ausführungsform ist der Sensor aufgeklebt. Von Vorteil ist dabei, dass ein im Wesentlichen flächiger Anschluss ohne Hohlräume an die Aufnahmefläche für den Sensor ausgebildet ist. Somit ergibt sich bei geeigneter Auswahl des Klebers ein sehr hoher Anteil an Nutzsignal bei der Messung der gennanten physikalischen Größen.

Bei einer weiteren erfindungsgemäßen Ausführungsform weist die Welle Wellenbereiche mit großen und kleinen Durchmessern auf. Insbesondere sind dabei mindestens zwei Wellenbereiche vorhanden, die derart angeordnet sind, dass ein oder mehrere Sensoren auf und/oder zwischen diese Wellenbereiche mit großem Durchmesser montiert oder geklebt sind. Von Vorteil ist dabei, dass durch die Radiusvergrößerung ein hoher Wert für Verschiebung der Außenenden oder Mantelflächen der Wellenbereiche mit großem Durchmesser erreichbar ist. Diese großen Verschiebungen ergeben im Sensor oder Sensorplättchen große Verformungen und/oder Mess-Spannungen, die wiederum einen sehr hohen Anteil an Nutzsignal zur Folge haben.

Bei dem Verfahren zur Prozesssteuerung ist besonders vorteilhaft, dass der industrielle Prozess, beispielsweise ein Fertigungsprozess oder ein logistischer Prozess, geregelt oder gesteuert wird unter Verwendung der gemessenen Daten und Informationen. Es sind dabei nicht nur spezielle Aktionen bei Über- oder Unterschreitung von kritischen Werten auslösbar sondern auch Vorgänge, die messwertabhängig veränderbar sind. Darüber hinaus lässt sich beispielsweise die Motorleistung als Funktion des gemessenen Drehmoments oder der gemessenen Axial- und/oder Querkraft beeinflussen. Auch für übergeordnete Steuer- und Regelverfahren, die mehrere Antriebe beeinflussen, sind die gemessenen Werte der gennanten physikalischen Größen als Eingangsgrößen verwendbar.

**Bei dem Verfahren ist auch eine Diagnose derart vorteilhaft vorsehbar**, dass ein Antrieb auf diese Weise überwachbar ist oder eine einem Flugschreiber entsprechende Funktion ausführbar ist. Somit können Ursachen für Probleme, wie beispielsweise Zerstörung oder Verschleiß infolge Überlastung, diagnostiziert werden und daraufhin Gegenmaßnahmen getroffen werden.

**Bei der Erfindung ist auch eine derartige Baureihe besonders vorteilhaft bildbar**, dass eine bestehende Baureihe nicht wesentlich verändert werden muss, sondern nur die erfindungsgemäßen Teile oder Komponenten zum sowieso vorhandenen Baukasten, also der Menge aller Teile oder Komponenten, hinzugefügt werden. Somit ergeben sich nur geringfügige zusätzliche Lagerkosten. Umkonstruktionen und/oder Maßänderungen innerhalb der Baureihe sind vorteilhafterweise unnötig oder unwesentlich.

Weitere vorteilhafte Ausgestaltungen ergeben sich aus den abhängigen Ansprüchen.

### Bezugszeichenliste

- 1: Abtriebswelle
- 2: Sensorpatrone
- 3,23: Außenantenne, stehend, mit Anschlussleitung
- 4,24: Innenantenne, drehend, mit Anschlussleitung
- 5: Lager
- 6: Getriebegehäuse
- 7: Axialbohrung
- 22: Drehmomentsensor
- 31: hülsenähnliches Gehäuse
- 32,33,41,52,53,63,73,83,85,91,101,112: Sensorplättchen
- 42: Adapter
- 51, 71, 81: Welle
- 61 .: Dehnungen
- 62: Stauchungen
- 72: Aufnahmefläche
- 81: Wellenbereich mit kleinem Durchmesser
- 82: Wellenbereich mit großem Durchmesser
- 84: Verdrehung
- 102: Steg
- 92: Adapter
- 111: Fuß

- d1, d2: Dehnungsrichtung
- s1, s2: Stauchungsrichtung
- r: Radius

Die Erfindung wird nun anhand von einer Abbildung näher erläutert:
Figur 1 zeigt einen erfindungsgemäße Sensorpatrone in der Axialbohrung der drehbaren Welle.
Figur 2 zeigt einen erfindungsgemäßen Sensor außen auf der drehbaren Welle.
Figur 3 zeigt einen Sensor in einer Patrone zum Einbau in die Axialbohrung der drehbaren Welle.
Figur 4 zeigt einen erfindungsgemäßen Sensor auf einem Adapter.
Figur 5 zeigt in die Axialbohrung der drehbaren Welle eingebaute Sensoren.
Figur 6 zeigt die Verformung eines Sensorplättchen unter Krafteinwirkung.
Figur 7 zeigt einen Sensor auf einer Aufnahmefläche einer drehbaren Welle.
Figur 8 zeigt zwei Sensoren auf einer speziell geformten, drehbaren Welle.
Figur 9 zeigt einen erfindungsgemäßen Sensor auf einem Adapter.
Figur 10 zeigt einen auf Stegen montierten Sensor.
Figur 11 zeigt einen auf Füßen montierten Sensor.

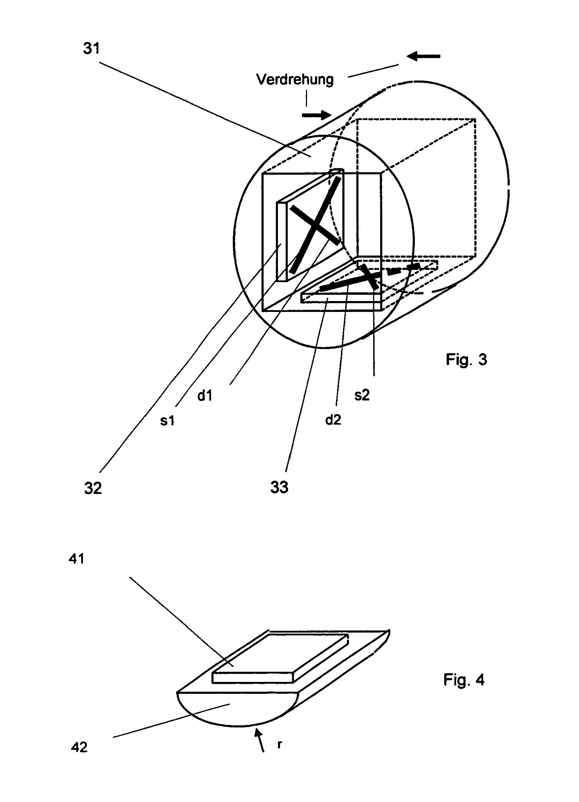

Die Figuren 3, 5, 7, 8, 10, 11 zeigen Beispiele, die das Verständnis der Erfindung erleichtern, bei denen es sich aber nicht um Ausführungsformen der Erfindung handelt.

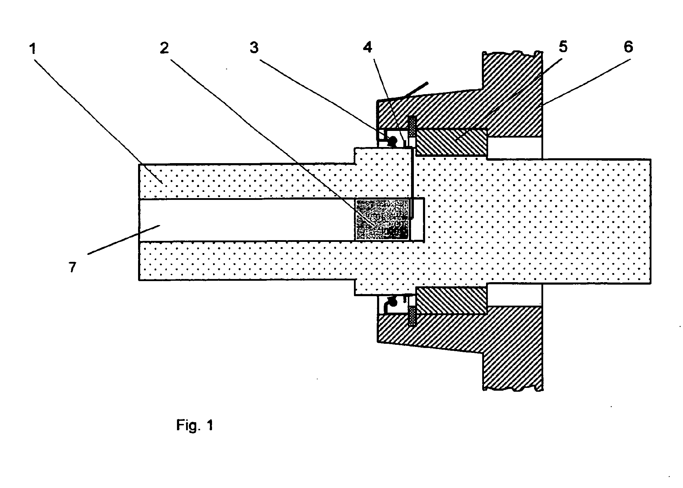

In der Figur 1 ist bei einem erfindungsgemäßen Ausführungsbeispiel die drehbare Welle als Abtriebswelle 1 eines Getriebes mit Getriebegehäuse 6 ausgeführt, wobei die Abtriebswelle 1 vom Lager 5 gestützt ist. Der Sensor ist mittels einer Sensorpatrone 2 in eine Axialbohrung 7 der Abtriebswelle 1 eingebracht, wobei die Sensorpatrone 2 eingeklebt ist. Elektrisch wird der Sensor mit der mitdrehbaren Innenantenne 4 mit Hilfe einer Anschlussleitung verbunden. Die Anschlussleitung wird dabei durch eine kleine radiale Bohrung geführt. Die stehende Außenantenne 3 ist mit ihrer Anschlussleitung mit der ersten stationären elektronischen Schaltung elektrisch verbunden. Der Sensor umfasst mindestens ein Sensorplättchen.

Bei einem ersten erfindungsgemäßen Ausführungsbeispiel wird als Sensor in der Sensorpatrone 2 ein Transponder eingesetzt. Bei einem solchen System sendet die erste stationäre elektronische Schaltung einen hochfrequenten elektromagnetischen Wellenzug, der über die Außenantenne 3 abgestrahlt wird und von der Innenantenne 4 empfangen wird. Unter Wellenzug wird in dieser Schrift nicht nur ein Einzelpuls sondern auch eine Pulsfolge verstanden.

Der Transponder weist eine weitere elektronische Schaltung auf, die ihre Versorgungsenergie aus dem genannten Wellenzug bezieht. Außerdem umfasst diese weitere elektronische Schaltung mindestens einen hochintegrierten Chip, wie Mikroprozessor oder dergleichen, an den kleinste Messfühler, wie Piezoelemente oder Dehnungsmessstreifen oder dergleichen, zur Messung physikalischer Größen angeschlossen sind. Die weitere elektronische Schaltung sendet nach dem Beginn des Eintreffens des beschriebenen Wellenzuges einen Wellenzug zurück, der derart moduliert und/oder codiert ist, dass Informationen über die von den Messfühlern aufgenommenen Werte der physikalischen Größen von der ersten elektronischen Schaltung empfangen und bearbeitet werden können.

Als physikalische Größen werden insbesondere die an der drehbaren Welle auftretende Axial- und/oder Querkraft und/oder das an die Welle übertragenen Drehmoment erfasst.

Vorteilhaft ist bei dem Einsatz der genannten Transponder, dass die Hochfrequenz fast beliebig wählbar ist, insbesondere sind Transponder im erfindungsgemäßen System mit Frequenzen von 100kHz oder auch bis 10 GHz einsetzbar.

Bei weiteren erfindungsgemäßen Ausführungsbeispielen sind auch Transponder einsetzbar, bei denen die verschiedene Frequenzen für Energie- und Informationsübertragung verwendet werden. Somit stören sich die zugehörigen Wellen nicht und es ist sogar ein im Wesentlichen gleichzeitiger Energie und Informationsaustausch zum Transponder hin und vom Transponder her ausführbar.

Bei einem zweiten erfindungsgemäßen Ausführungsbeispiel wird als Sensor kein Transponder verwendet, sonder ein Oberflächenwellen-Sensor (OFW-Sensor). Dabei liegt die von der ersten elektronischen Schaltung über die Außenantenne 3 ausgestrahlte Hochfrequenz im Bereich von etwa 3 GHz. Es sind aber auch Frequenzen von 100 MHz bis 10 GHZ einsetzbar. Der über die Innenantenne 4 empfangene Wellenzug wird als elektrische Spannung an Piezoelemente angelegt, die dann im Takt des Wellenzuges schwingen. Die Piezoelemente sind auf einem Plättchen aufgebracht und erzeugen somit Oberflächenwellen die bis zu ebenfalls auf dem Plättchen aufgebrachten Reflektoren laufen und dort dann reflektiert werden. Die reflektierten Teile treffen zumindest teilweise wieder auf die Piezoelemente, die somit wieder diese akustischen Oberflächenwellen in elektrische Spannungen umwandeln. Somit wird sozusagen ein jeweils einem Reflektor zugeordneter Wellenzug zurückgestrahlt. Über die Außenantenne 3 empfängt die erste elektronische Schaltung das Signal und verarbeitet die Informationen, die mittels der Echos an sie übertragen werden.

Da die Laufzeit der akustischen Oberflächenwellen von physikalischen Größen, wie Temperatur und Spannungszuständen des Plättchens abhängt, sind durch geeignete Anordnung der Reflektoren Informationen über Stauchung und Dehnung in verschiedenen Richtungen des Plättchens zugänglich und messbar. Das genannte Drehmoment und die genannte Axial- und/oder Querkraft sind aus solchen Informationen von der ersten elektronischen Schaltung bestimmbar.

Von Vorteil ist der robuste, gegen Störungen unempfindliche, schlichte und damit kostengünstige Aufbau des Systems. Außerdem sind die speziell für die Erfindung notwendigen Teile oder Komponenten innerhalb der bestehenden Getriebe und Motor-Baureihen einsetzbar und ohne Maßänderung oder wesentliche Umkonstruktion verwendbar.

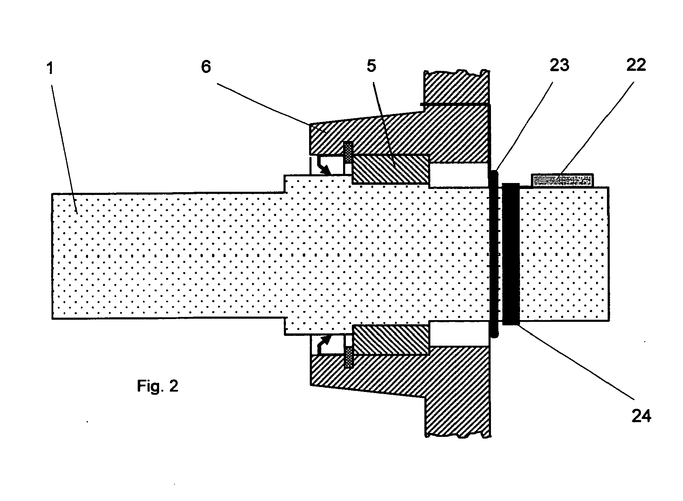

In der Figur 2 ist ein weiteres erfindungsgemäßes Ausführungsbeispiel gezeigt. Dabei ist der Drehmomentsensor 22 auf der Außenfläche der drehbaren Welle aufgebracht. Die Welle ist als Abtriebswelle 1 ausgeführt. Die Außenantenne 23 ist am Getriebegehäuse 6 angebracht und steht parallel zur Innenantenne 24, die auf der drehbaren Welle angebracht ist und mit dem Drehmomentsensor 22 elektrisch verbunden ist. Der Drehmomentsensor 22 ist wiederum als OFW-Sensor ausgeführt.

In der Figur 3 ist die in der Figur 1 gezeigte Sensorpatrone 2 skizziert. Das hülsenähnliche Gehäuse 31 der Sensorpatrone weist einen Hohlraum auf, mit ebenen Innenflächen, auf die ebene Sensorplättchen 32, 33 aufgeklebt sind. Eine beispielhaft ausgeführte Verdrehung ist mit zwei Pfeilen symbolisiert. Demzufolge weisen beide Sensorplättchen 32, 33 Dehnungsrichtungen d1, d2 und Stauchungsrichtungen s1, s2 auf. Die Sensorplättchen stellen den wichtigsten Teil des Sensors dar. Bei der Ausführung als OFW-Sensoren sind die Reflektoren in entsprechend geeigneter Weise derart angeordnet, dass die von Dehnung und Stauchung abhängigen Schallgeschwindigkeiten Änderungen des zeitlichen Auftretens der jeweiligen Echos bewirken. Außerdem ist die Anordnung, insbesondere die Anordnung der Reflektoren, derart ausgeführt, dass die Oberflächenwellen in ersten Richtungen der Stauchungen und Dehnungen von diesen beeinflusst werden. Aus diesen Informationen bestimmt die erste elektronische Schaltung das Drehmoment nach Betrag und Vorzeichen und Axial- und/oder Querkraft nach Betrag und Orientierung. Andere als die ersten Richtungen sind für die Ausbreitung des Schalls ebenfalls möglich, jedoch sind in diesen Richtungen keine Reflektoren angebracht, die die Oberflächenwellen zum jeweiligen Piezoelement zurückreflektieren.

Die in der Figur gezeigte Anordnung von um 90° versetzt angeordnete Sensorplättchen 32, 33 ist besonders vorteilhaft, weil die Vektorkomponenten der physikalischen Größen im Wesentlichen direkt bestimmbar sind.

Pro Umdrehung werden die physikalische Größen mehrfach abgefragt und gemessen. In Weiterbildung werden die Messwerte zusammen mit Messwerten eines Drehzahlsensors ausgewertet. Es sind auch umlaufende Drehmomente messbar.

Bei einem weiteren Beispiel sind mehrere Sensoren an mehreren Flächen angebracht. Wiederum bei einem weiteren Beispiel wird die Sensorpatrone 2 in die Axialbohrung 7 nicht eingeklebt sondern mittels Klemmvorrichtungen oder Profilen zum Übertragen der Wellenverformung verbunden.

In der Figur 4 ist für ein weiteres erfindungsgemäßes Ausführungsbeispiel ein Sensorplättchen 41 gezeigt, das mittels eines Adapters 42 befestigt wird an der Innenfläche der mit der Axialbohrung 7 ausgeführten Abtriebswelle 1. Der Adapter 42 weist dazu an seiner Außenfläche den Innenradius r der Axialbohrung 7 auf. Mittels des Adapters 42 ist das Sensorplättchen 41 schnell und einfach einklebbar. Es liegt ein vollflächiger Kontakt vor, der eine ausgeprägt Verformung des Sensorplättchens bei Einwirkung durch Querkraft und/oder Drehmoment bewirkt. Daher weist das Messsignal einen hohen Anteil von Nutzsignal auf.

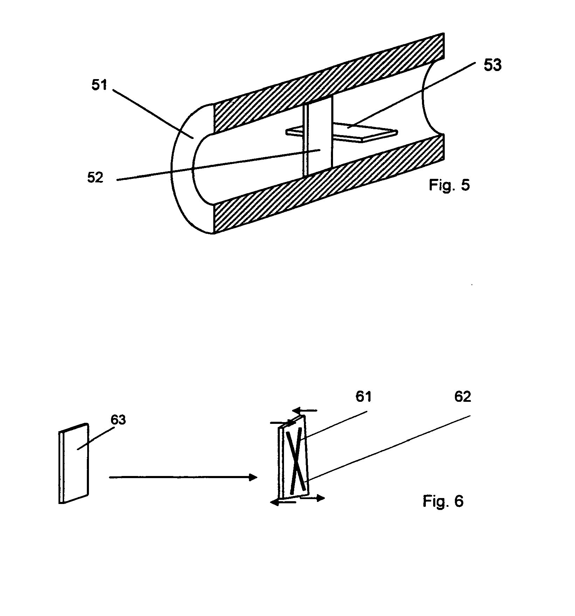

In der Figur 5 ist für ein weiteres Beispiel eine alternative Montagetechnik für Sensorplättchen 52, 53 zum Applizieren in die Axialbohrung der Welle 51 gezeigt. Die Sensorplättchen 52, 53 werden stehend in die Bohrung appliziert. Bei Wellenverformung unter Einwirkung von Drehmoment wird der Sensor in sich verdreht.

Figur 6 symbolisiert diese Verdrehung oder Verformung des Sensorplättchens 63 vor und bei einer solchen Einwirkung des Drehmoments. Dabei entspricht das Sensorplättchens 63 jeweils den Sensorplättchen 52 oder 53. Die beispielhaften Verformungen sind durch Pfeile angedeutet und bewirken Stauchungen 62 und Dehnungen 61.

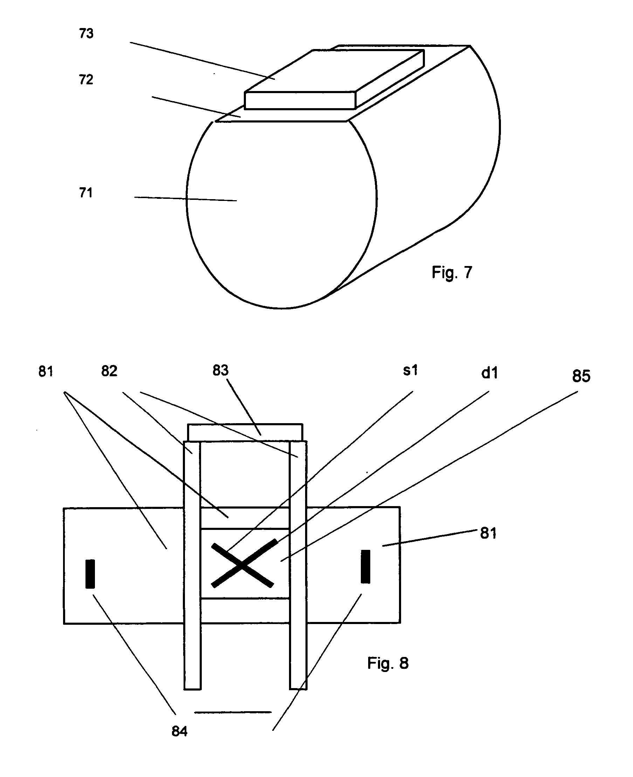

Figur 7 zeigt für ein weiteres Beispiel ein Sensorplättchen 73, das auf der ebenen Aufnahmefläche 72 der Welle 71 angebracht ist. Bei weiteren Beispielen wird die Welle mit mehreren solchen Aufnahmeflächen versehen, beispielsweise mit zwei um 90 ° versetzten. Es liegt auch in diesem Fall ein vollflächiger Kontakt vor, der eine gute Übertragung der Wellenverformung auf das Sensorplättchen zur Folge hat und somit ein Messsignal mit hohem Nutzanteil ergibt.

Figur 8 zeigt für ein weiteres Beispiel schematisch eine Welle mit Wellenbereichen 81 mit kleinem Durchmesser und Wellenbereichen 82 mit großem Durchmesser. Diese Wellenbereiche sind beispielhaft mittels eines Drehvorgangs erzeugbar, bei dem in den verschiedenen Bereichen verschiedene Materialmengen aus dem Rohteil herausgedreht und/oder spanend gefertigt werden. Das Sensorplättchen 83 ist auf die beiden hervorragenden Wellenbereiche 82 mit großem Durchmesser aufgesetzt und angeklebt. An einer um etwa 90° versetzten Position ist das Sensorplättchen 85 zwischen die beiden stegförmig hervorragenden Wellenbereiche 82 mit großem Durchmesser eingesetzt. Stauchungsrichtung s1 und Dehnungsrichtung d1 bei der durch die Pfeile angedeuteten Verdrehung 84, also Torsion, sind beim Sensorplättchen 85 eingezeichnet. Das in Figur 8 gezeigte Anbringen der Sensorplättchen hat den Vorteil, dass wegen des vergrößerten Radius der Welle die Verformung des Sensorplättchens vergrößert ist und somit das Messsignal einen größeren Anteil an Nutzsignal aufweist. Die Wellenbereiche mit großem Durchmesser 82 sind im Wesentlichen drehmomentfrei.

In anderen Beispielen wird nur das Sensorplättchen 85 eingesetzt. In wiederum anderen Beispielen wird nur das Sensorplättchen 83 verwendet. In weiteren Beispielen wird das Sensorplättchen 85 zwei- oder mehrfach an um etwa 90° versetzten Positionen eingesetzt. In weiteren Beispielen wird das Sensorplättchen 83 ebenfalls zwei- oder mehrfach an um etwa 90° versetzten Positionen eingesetzt.

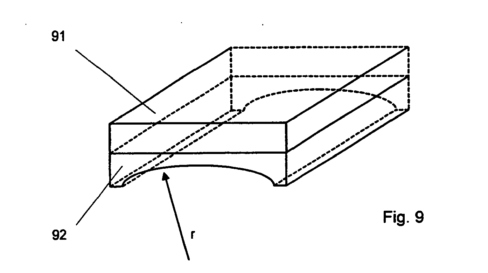

Figur 9 zeigt für ein weiteres erfindungsgemäßes Ausführungsbeispiel einen vollflächigen Adapter 92 für das Sensorplättchen 91 zur Montage auf den Außen- oder Mantelflächen der drehbaren Welle. Wegen des vollflächigen Kontaktes ergibt sich wiederum ein Messsignal mit einem großen Anteil an Nutzsignal. Außerdem muss die Außenfläche der Welle nicht bearbeitet werden. Daher ergibt sich auch kein störender Einfluss auf die Drehmomentübertragung in der Welle, wie beispielsweise Reduzierung der zulässigen Höchstbelastung.

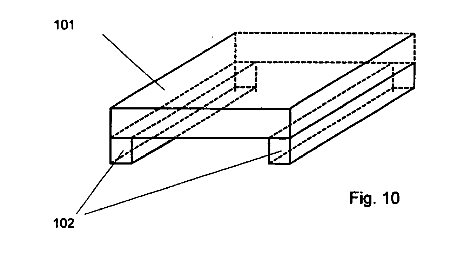

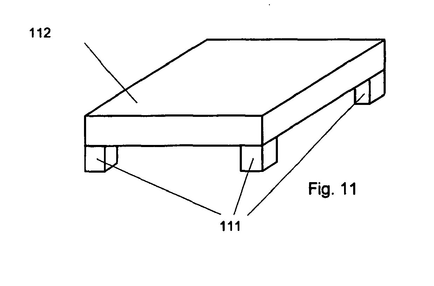

Figur 10 zeigt für ein weiteres Beispiel als Zwischenstück keinen Adapter für das Sensorplättchen 101 zur Montage auf der Außenfläche der drehbaren Welle sondern Stege 102. Figur 11 zeigt für ein weiteres Beispiel als Zwischenstück für das Sensorplättchen 112 zur Montage auf der Außenfläche der drehbaren Welle Füße 111. Stege 102 und Füße 111 werden aufgeklebt. In weiteren Beispielen werden Sensorplättchen101, Stege 102 und Füße 111 angeschraubt oder geklemmt.

Vorteil bei den Beispielen der Figuren 10 und 11 ist, dass sie für Wellen mit verschiedenen Außenflächen verwendbar sind. Außerdem findet keine wesentliche Kraft- oder Drehmomentübertragung über das Sensorplättchen, die Stege oder die Füße zur Erzeugung der Messsignale statt. Dabei bedeutet 'keine wesentliche' mindestens zehnmal kleinere Beträge an Kraft und/oder Drehmoment als der Betrag der gesamten in der Welle wirkenden Kraft und/oder des auf die Welle übertragenen Drehmoments.

Bei allen erfindungsgemäßen Ausführungsbeispielen umfasst das erfindungsgemäße System die beschriebenen Sensoren oder Sensorplättchen, mitdrehbare oder stationäre Innen- und/oder Außen-Antennen und zumindest die erste elektronische Schaltung. Außerdem muss eine Welle vorhanden sein. Die Welle kann bei allen erfindungsgemäßen Ausführungsbeispielen An-, Abtriebs oder Zwischenwelle sein.

Außerdem bezieht sich die Erfindung auch auf Achsen. Dabei sind insbesondere die Messungen der Quer- und/oder Axialkräfte vorteilhaft. Das erfindungsgemäße System wird dabei in entsprechender Weise aufgebaut, wie in den bezüglich Wellen beschriebenen erfindungsgemäßen Ausführungsformen.

Die in dieser Schrift beschriebenen Antennen umfassen jeweils auch alle Ausführungsformen einer kapazitiven, induktiven, im Wesentlichen kapazitiven und/oder im Wesentlichen induktiven Kopplung.

Bei weiteren erfindungsgemäßen Ausführungsbeispielen werden als elektromagnetische Wellen auch Licht, Infrarot oder Ultraviolett eingesetzt. Dabei sind die Antennen dann in geeigneter Weise ausgeführt, insbesondere als photosensitives oder photonenemittierendes, also lichtempfindliches Element oder lichtsendendes Element ausgeführt.

## Patentansprüche

1. System zur Messung von Drehmoment, Axial- und/oder Querkraft und Temperatur bei einer Achse oder drehbaren Welle,
wobei eine erste stationäre elektronische Schaltung und mindestens ein Sensor Mittel zum mindestens jeweils unidirektionalen zumindest zeitweisen Austausch von Energie und Information mittels elektromagnetischer Wellen und/oder elektromagnetischer Wellenzüge umfassen,
und dass der Sensor mit der drehbaren Welle derart verbunden oder angekoppelt ist, dass vom Sensor zur ersten elektronischen Schaltung übertragene elektromagnetische Wellen und/oder elektromagnetische Wellenzüge Informationen über die Werte der physikalischen Größen umfassen,
und dass der Sensor mindestens ein Antennenteil umfasst und die erste stationäre elektronische Schaltung mit mindestens einem weiteren Antennenteil verbunden ist,
und wobei zur Verbindung des als Sensorplättchen (41, 91) ausgebildeten Sensors und der drehbaren Welle ein einziges Zwischenstück (42, 92) als Adapter zwischen Sensorplättchen (41,91) und drehbarer Welle angeordnet ist,
wobei der Adapter (41,91) eine Montagefläche mit dem Innenradius einer Axialbohrung der Welle zur Montage in diese Axialbohrung oder mit dem Außenradius der Welle zur Montage auf deren Außenseite aufweist sowie eine ebene Aufnahmefläche zum flächigen Anschluss des Sensorplättchens (41,91) ohne Hohlräume.

2. System nach Anspruch 1,
wobei die erste stationäre elektronische Schaltung Mittel zum Aussenden und Empfangen von Radarwellenzügen umfasst,
und wobei der Sensor mindestens ein OFW-Sensor ist zur Erfassung von Werten des Drehmoments und/oder der Axial- und/oder Querkraft,
wobei der OFW-Sensor derart ausgeführt ist, dass die rückgestrahlten Radarwellenzügen oder Radarechos entsprechende Information enthalten.

3. System nach einem der vorangegangenen Ansprüche,
**dadurch gekennzeichnet, dass**
das Zwischenstück eine Patrone (2) ist.

4. System nach einem der vorangegangenen Ansprüche,
**dadurch gekennzeichnet, dass**
die Welle im Bereich des Sensors zylindrisch ausgebildet ist.

5. System nach Anspruch 1,
**dadurch gekennzeichnet, dass**
das Zwischenstück ein Adapter (92) ist, der den Zwischenraum zwischen Sensor und drehbarer Welle füllt.

6. System nach einem der vorangegangenen Ansprüche,
**dadurch gekennzeichnet, dass**
der Sensor passiv betreibbar ist, insbesondere keine Batterie umfasst.

7. System nach einem der vorangegangenen Ansprüche,
**dadurch gekennzeichnet, dass**
dass der Sensor Mittel zum Umwandeln elektromagnetischer Wellen, wie Radarwellen, in akustische Wellen und zurück umfasst, und derart ausgeführt ist, dass er auf eingestrahlte elektromagnetische Wellenzüge mit zeitverzögerten elektromagnetischen Wellenzügen antwortet, wobei die Zeitverzögerung von den Werten der gennanten physikalischen Größen oder deren Änderung beeinflusst ist.

8. System nach einem der vorangegangenen Ansprüche,
**dadurch gekennzeichnet, dass**
der Sensor ein OFW-Sensor ist.

9. System nach einem der vorangegangenen Ansprüche,
**dadurch gekennzeichnet, dass**
dass der Sensor Mittel zum Umwandeln elektromagnetisher Wellen, wie Radarwellen, in elektrischen Strom zur Versorgung einer elektrischen Schaltung des Sensors umfasst und die elektrische Schaltung Mittel zum Bestimmen der genannten physikalischen Größen oder deren Änderung umfasst, und dass der Sensor Mittel zum Zurücksenden von Informationen über die bestimmten Werte der physikalischen Größen oder deren Änderung mittels elektromagnetischer Wellen umfasst.

10. System nach einem der vorangegangenen Ansprüche,
**dadurch gekennzeichnet, dass**
der Sensor einen Transponder umfasst.

11. System nach einem der vorangegangenen Ansprüche,
**dadurch gekennzeichnet, dass**
dass der Sensor als Mittel zum Umwandeln elektromagnetischer Wellen eine Antenne, umfassend mindestens ein Antennenteil, umfasst

12. System nach einem der vorangegangenen Ansprüche,
**dadurch gekennzeichnet, dass**
die elektromagnetischen Wellen oder elektromagnetischen Wellenzüge Radarwellen sind und dass der Sensor mit mindestens einem Antennenteil und die erste elektronische Schaltung mit mindestens dem weiteren Antennenteil entsprechend geeignet ausgeführt sind.

13. System nach einem der vorangegangenen Ansprüche,
**dadurch gekennzeichnet, dass**
die Welle eine Antriebs-, Abtriebs-(1), Eintriebs und/oder Zwischenwelle ist

14. System nach einem der vorangegangenen Ansprüche,
**dadurch gekennzeichnet, dass**
die gennanten physikalischen Größen das mittels der Welle übertragene Drehmoment, das auf die drehbare Welle übertragene Drehmoment und/oder die in oder an der Welle auftretende Axial- und/oder Querkraft sind.

15. System nach einem der vorangegangenen Ansprüche,
**dadurch gekennzeichnet, dass**
der Sensor oder mindestens Teile des Sensors in einer Bohrung oder Axialbohrung der drehbaren Welle eingebaut ist oder sind,
und dass mindestens ein Antennenteil an der Innen- und/oder Außenseite der drehbaren Welle angebracht ist.
und die mit der ersten elektronischen Schaltung elektrisch verbundene Antenne entweder außerhalb oder innerhalb der Axialbohrung der drehbaren Welle stationär angebracht ist, wobei diese stationäre Antenne berührungsfrei zu drehbaren Teilen, wie dem Sensor oder der Welle, positioniert ist.

16. System nach einem der vorangegangenen Ansprüche,
**dadurch gekennzeichnet, dass**
der Sensor oder mindestens Teile des Sensors in die Bohrung oder Axialbohrung der drehbaren Welle mittels einer Patrone (2) eingebaut ist oder sind,
und dass mindestens ein Antennenteil an der Außenseite der drehbaren Welle angebracht ist

17. System nach einem der vorangegangenen Ansprüche,
**dadurch gekennzeichnet, dass**
der Sensor oder mindestens Teile des Sensors mit mindestens einem Antennenteil an der Innen- und/oder Außenseite der drehbaren Welle eingebaut ist oder sind.

18. System nach einem der vorangegangenen Ansprüche,
**dadurch gekennzeichnet, dass**
der Sensor oder mindestens eines seiner Teile flächig ausgebildet ist und die Normalenrichtung der Fläche wenigstens teilweise radial liegt.

19. System nach einem der vorangegangenen Ansprüche,
**dadurch gekennzeichnet, dass**
die drehbare Welle in zumindest einem Lager gelagert ist, das in ein Gehäuse einer Vorrichtung, eines Getriebes oder eines Motors eingebaut ist.

20. System nach einem der vorangegangenen Ansprüche,
**dadurch gekennzeichnet, dass**
an dem Lager, der Vorrichtung, dem Getriebe oder dem Motor zumindest ein stationäres Antennenteil angebracht ist.

21. System nach einem der vorangegangenen Ansprüche,
**dadurch gekennzeichnet, dass**
der Sensor derart flächig ausgebildet ist und zwei, insbesondere zueinander senkrechte, Orientierungsrichtungen in der Fläche derart vorhanden sind, dass er Mittel zur Detektion von Stauchung und Dehnung in einer oder zwei dieser Orientierungsrichtungen umfasst.

22. System nach einem der vorangegangenen Ansprüche,
**dadurch gekennzeichnet, dass**
der Sensor, Teile des Sensors, das oder die Sensorplättchen (91), die Sensorpatrone (2) und/oder das Zwischenstück (92)aufgeklebt ist oder sind.

23. System nach einem der vorangegangenen Ansprüche,
**dadurch gekennzeichnet, dass**
die Welle Wellenbereiche mit großen und kleinen Durchmessern aufweist, wobei ein oder mehrere Sensoren auf und/oder zwischen Wellenbereiche mit großem Durchmesser montiert oder geklebt sind.

24. Verfahren zur Prozesssteuerung bei einem System nach einem der vorangegangenen **Ansprüche, wobei**
an einem Antrieb, umfassend Getriebe und Motor, als physikalischen Größe Drehmoment, Axial- und/oder Querkraft, Verformung, an einer Achse oder an einer drehbaren Welle oder an einem drehbaren Teil mittels eines sich mitdrehbaren Sensors gemessen wird,
wobei zumindest der Sensor, eine erste elektronische Schaltung und Komponenten des Getriebes und/oder Motors ein System zur Messung der physikalischen Größe bilden, das zumindest auch eine Achse oder drehbare Welle, eine mitdrehbare Antenne und eine stationäre Antenne umfasst,
- der Sensor berührungslos mit Energie zur Durchführung des Messvorgangs versorgt wird,
- das Messergebnis als Information berührungslos vom Sensor an eine stationäre erste elektronische Schaltung mit Antenne übertragen wird,
- und der Prozess in Abhängigkeit von dieser Messung beeinflusst und/oder gesteuert wird.

25. Verfahren nach Anspruch 24,
**dadurch gekennzeichnet, dass**
die erste elektronische Schaltung über ein Netzwerk mit weiteren Teilnehmern oder einen Feldbus mit weiteren elektronischen Schaltungen und/oder Feldbusteilnehmern, wie Zentralrechner, verbunden ist.

26. Verfahren nach Anspruch 24,
**dadurch gekennzeichnet, dass**
eine Notabschaltung oder Notreaktion bei Überschreitung kritischer Werte der genannten physikalischen Größe ausgelöst wird.

27. Verfahren nach Anspruch 24,
**dadurch gekennzeichnet, dass**
die mitdrehbare Antenne elektrisch mit einem OFW-Sensor verbunden ist und auf einer drehbaren Welle direkt oder integriert in eine sich mit der Welle drehenden Komponente montiert ist und
die stationäre Antenne elektrisch mit einer ersten elektronischen Schaltung verbunden und in eine Komponente integriert ist, die zum Senden und/oder Empfangen von Hochfrequenz, insbesondere 100MHz bis 10 GHz, geeignet ausgeführt ist.

28. Verfahren nach Anspruch 24,
**dadurch gekennzeichnet, dass**
die erste stationäre elektronische Schaltung mit dem mindestens einen Sensor Energie und Information mittels elektromagnetischer Wellen und/oder elektromagnetischer Wellenzüge jeweils unidirektional zumindest zeitweise austauscht.

29. Verfahren nach Anspruch 24,
**dadurch gekennzeichnet, dass**
die erste stationäre elektronische Schaltung Radarwellenzüge aussendet und empfängt.

30. Verfahren nach Anspruch 24,
**dadurch gekennzeichnet, dass**
die den erfassten Werten entsprechende Information in den vom OFW-Sensor rückgestrahlten Radarwellenzügen oder Radarechos enthalten sind.

31. Verfahren nach Anspruch 24,
**dadurch gekennzeichnet, dass**
der Sensor passiv arbeitet.

32. Verfahren nach Anspruch 24,
**dadurch gekennzeichnet, dass**
der Sensor auf eingestrahlte elektromagnetische Wellenzüge mit zeitverzögerten elektromagnetischen Wellenzügen antwortet, wobei die Zeitverzögerung von den Werten der genannten physikalischen Größen oder deren Änderung beeinflusst ist.

## Claims

1. A system for the measurement of torque, axial and/or lateral force and temperature in an axle or rotatable shaft,
wherein a first stationary electronic circuit and at least one sensor comprise means for the, in each case, at least unidirectional, at least intermittent exchange of energy and information by means of electromagnetic waves and/or electromagnetic wave trains,
and the sensor is connected or coupled to the rotatable shaft in such a way that electromagnetic waves and/or electromagnetic wave trains transmitted from the sensor to the first electronic circuit contain information relating to the values of the physical variables,
and the sensor comprises at least one antenna part and the first stationary electronic circuit is connected to at least one further antenna part,
and wherein, in order to connect the sensor, which is formed as a sensor chip (41, 91), to the rotatable shaft, a single intermediate piece (42, 92) is arranged as an adapter between the sensor chip (41, 91) and the rotatable shaft,
wherein the adapter (41, 91) has a mounting surface corresponding to the inner radius of an axial bore of the shaft for mounting in this axial bore or corresponding to the outer radius of the shaft for mounting on the outer surface thereof, and has a flat receiving surface for the planar connection of the sensor chip (41, 91) without gaps.

2. A system according to claim 1,
wherein the first stationary electronic circuit comprises means for transmitting and receiving radar wave trains,
and wherein the sensor is at least one SW sensor for the detection of torque and/or axial and/or lateral force values,
wherein the SW sensor is constructed so that the radar wave trains or radar echoes transmitted back contain corresponding information.

3. A system according to either one of the preceding claims, **characterised in that** the intermediate piece is a cartridge (2).

4. A system according to any one of the preceding claims, **characterised in that** the shaft is cylindrically formed in the region of the sensor.

5. A system according to claim 1, **characterised in that** the intermediate piece is an adapter (92) which fills the space between the sensor and the rotatable shaft.

6. A system according to any one of the preceding claims, **characterised in that** the sensor is passively operable, in particular does not comprise a battery.

7. A system according to any one of the preceding claims, **characterised in that** the sensor comprises means for converting electromagnetic waves, such as radar waves, into acoustic waves and back and is constructed so that it responds to received electromagnetic wave trains with time-delayed electromagnetic wave trains, wherein the time delay is influenced by the values of the aforementioned physical variables or their change.

8. A system according to any one of the preceding claims, **characterised in that** the sensor is a SW sensor.

9. A system according to any one of the preceding claims, **characterised in that** the sensor comprises means for converting electromagnetic waves, such as radar waves, into electrical current for supplying an electrical circuit of the sensor, and the electrical circuit comprises means for determining the aforementioned physical variables or their change, and **in that** the sensor comprises means for sending back information relating to the determined values of the physical variables or their change by means of electromagnetic waves.

10. A system according to any one of the preceding claims, **characterised in that** the sensor comprises a transponder.

11. A system according to any one of the preceding claims, **characterised in that** the sensor comprises an antenna, comprising at least one antenna part, as a means for the conversion of electromagnetic waves.

12. A system according to any one of the preceding claims, **characterised in that** the electromagnetic waves or electromagnetic wave trains are radar waves and **in that** the sensor with at least one antenna part and the first electronic circuit with at least the further antenna part are correspondingly suitably formed.

13. A system according to any one of the preceding claims, **characterised in that** the shaft is a drive, output (1), input and/or intermediate shaft.

14. A system according to any one of the preceding claims, **characterised in that** the aforementioned physical variables are the torque transmitted by means of the shaft, the torque transmitted to the rotatable shaft and/or the axial and/or lateral force occurring in or on the shaft.

15. A system according to any one of the preceding claims, **characterised in that** the sensor or at least parts of the sensor is or are installed in a bore or axial bore of the rotatable shaft, and **in that** at least one antenna part is mounted on the inside and/or outside of the rotatable shaft,
and the antenna, which is electrically connected to the first electronic circuit, is mounted in a stationary manner either outside or inside the axial bore of the rotatable shaft, wherein this stationary antenna is contactlessly positioned in relation to rotatable parts such as the sensor or the shaft.

16. A system according to any one of the preceding claims, **characterised in that** the sensor or at least parts of the sensor is or are installed in the bore or axial bore of the rotatable shaft by means of a cartridge (2) and **in that** at least one antenna part is mounted on the outside of the rotatable shaft.

17. A system according to any one of the preceding claims, **characterised in that** the sensor or at least parts of the sensor is or are installed with at least one antenna part on the inside and/or outside of the rotatable shaft.

18. A system according to any one of the preceding claims, **characterised in that** the sensor or at least one of its parts is formed in a planar manner and the normal direction of its surface at least partly lies radially.

19. A system according to any one of the preceding claims, **characterised in that** the rotatable shaft is mounted in at least one bearing installed in a casing of a device, a gearbox or an engine.

20. A system according to any one of the preceding claims, **characterised in that** at least one stationary antenna part is mounted on the bearing, the device, the gearbox or the engine.

21. A system according to any one of the preceding claims, **characterised in that** the sensor is formed in a planar manner and two, especially mutually perpendicular, orientation directions are provided in its surface in such a way that it comprises means for detecting compression and extension in one or both of these orientation directions.

22. A system according to any one of the preceding claims, **characterised in that** the sensor, parts of the sensor, the sensor chip or chips (91), the sensor cartridge (2) and/or the intermediate piece (92) is or are glued on.

23. A system according to any one of the preceding claims, **characterised in that** the shaft has shaft regions with large and small diameters, wherein one or more sensors are mounted or glued on and/or between shaft regions with a large diameter.

24. A method of process control in a system according to any one of the preceding claims, wherein
in a drive comprising a gearbox and an engine, torque, axial and/or lateral force or deformation are measured as a physical variable in an axle or in a rotatable shaft or in a rotatable part by means of a jointly rotatable sensor,
wherein at least the sensor, a first electronic circuit and components of the gearbox and/or engine form a system for measurement of the physical variable, which system at least also comprises an axle or rotatable shaft, a jointly rotatable antenna and a stationary antenna,
- the sensor is contactlessly supplied with energy for carrying out the measurement,
- the measuring result is contactlessly transmitted as information from the sensor to a first stationary electronic circuit with an antenna,
- and the process is influenced and/or controlled as a function of this measurement.

25. A method according to claim 24, **characterised in that** the first electronic circuit is connected via a network to further subscribers or via a field bus to further electronic circuits and/or field bus subscribers, such as a central computer.

26. A method according to claim 24, **characterised in that** an emergency disconnection or emergency reaction is triggered if critical values of the aforementioned physical variable are exceeded.

27. A method according to claim 24, **characterised in that** the jointly rotatable antenna is electrically connected to a SW sensor and is directly mounted on a rotatable shaft or is integrated into a component rotating together with the shaft, and the stationary antenna is electrically connected to the first electronic circuit and is integrated into a component which is appropriately constructed for transmitting and/or receiving high frequency, especially 100 MHz to 10 GHz.

28. A method according to claim 24, **characterised in that** the first stationary electronic circuit exchanges energy and information with the at least one sensor by means of electromagnetic waves and/or electromagnetic wave trains, in each case unidirectionally and at least intermittently.

29. A method according to claim 24, **characterised in that** the first stationary electronic circuit transmits and receives radar wave trains.

30. A method according to claim 24, **characterised in that** the information corresponding to the detected values is contained in the radar wave trains or radar echoes transmitted back from the SW sensor.

31. A method according to claim 24, **characterised in that** the sensor operates passively.

32. A method according to claim 24, **characterised in that** the sensor responds to received electromagnetic wave trains with time-delayed electromagnetic wave trains, wherein the time delay is influenced by the values of the aforementioned physical variables or their change.

## Revendications

1. Système de mesure d'un couple, d'une force axiale et/ou transversale et de la température sur un axe ou un arbre tournant,
dans lequel un premier circuit électronique stationnaire et au moins un capteur comprennent des moyens pour échanger au moins chaque fois de façon unidirectionnelle, au moins par moments, de l'énergie et des informations au moyen d'ondes électromagnétiques et/ou de trains d'ondes électromagnétiques,
et le capteur est raccordé ou accouplé à l'arbre tournant de manière que des ondes électromagnétiques et/ou trains d'ondes électromagnétiques transmis par le capteur au premier circuit électronique comprennent des informations sur les valeurs des grandeurs physiques,
et le capteur comprend au moins une partie d'antenne et le premier circuit électronique stationnaire est connecté à au moins une autre partie d'antenne,
une pièce intermédiaire unique (42, 92) étant disposée en tant qu'adaptateur entre plaquette de capteur (41, 91) et arbre tournant pour la liaison du capteur réalisé sous forme de plaquette de capteur (41, 91) et de l'arbre tournant,
l'adaptateur (41, 91) présentant une surface de montage ayant le rayon intérieur d'un alésage axial de l'arbre pour le montage dans cet alésage axial ou ayant le rayon extérieur de l'arbre pour le montage sur sa face extérieure ainsi qu'une surface de réception plane pour le raccordement en pleine surface de la plaquette de capteur (41, 91) sans cavités.

2. Système selon la revendication 1,
dans lequel le premier circuit électronique stationnaire comprend des moyens pour l'envoi et la réception de trains d'ondes radar,
et le capteur est au moins un capteur à ondes de surface ou capteur SAW pour la saisie de valeurs du couple et/ou de la force axiale et/ou transversale,
et le capteur SAW est réalisé de manière que les trains d'onde radar ou échos radar contiennent des informations correspondantes.

3. Système selon l'une des revendications précédentes,
**caractérisé par le fait**
**que** la pièce intermédiaire est une cartouche (2).

4. Système selon l'une des revendications précédentes,
**caractérisé par le fait**
**que** l'arbre est de forme cylindrique dans le secteur du capteur.

5. Système selon la revendication 1,
**caractérisé par le fait**
**que** la pièce intermédiaire est un adaptateur (92) qui remplit l'espace intermédiaire entre capteur et arbre tournant.

6. Système selon l'une des revendications précédentes,
**caractérisé par le fait**
**que** le capteur peut fonctionner de manière passive, en particulier ne comprend pas de pile.

7. Système selon l'une des revendications précédentes,
**caractérisé par le fait**
**que** le capteur comprend des moyens pour convertir des ondes électromagnétiques, comme des ondes radar, en ondes acoustiques et inversement, et est réalisé de manière à répondre à des trains d'ondes électromagnétiques incidents par des trains d'ondes électromagnétiques retardés dans le temps, le retard de temps dépendant des valeurs des grandeurs physiques mentionnées ou de leur variation.

8. Système selon l'une des revendications précédentes,
**caractérisé par le fait**
**que** le capteur est un capteur SAW.

9. Système selon l'une des revendications précédentes,
**caractérisé par le fait**
**que** le capteur comprend des moyens pour convertir des ondes électromagnétiques, comme des ondes radar, en courant électrique pour alimenter un circuit électrique du capteur et le circuit électrique comprend des moyens pour déterminer les grandeurs physiques mentionnées ou leur variation, et que le capteur comprend des moyens pour renvoyer des informations sur les valeurs déterminées des grandeurs physiques ou de leur variation au moyen d'ondes électromagnétiques.

10. Système selon l'une des revendications précédentes,
**caractérisé par le fait**
**que** le capteur est un transpondeur.

11. Système selon l'une des revendications précédentes,
**caractérisé par le fait**
**que** le capteur comprend en tant que moyens pour la conversion d'ondes électromagnétiques une antenne comprenant au moins une partie d'antenne.

12. Système selon l'une des revendications précédentes,
**caractérisé par le fait**
**que** les ondes électromagnétiques ou trains d'ondes électromagnétiques sont des ondes radar et que le capteur avec au moins une partie d'antenne et le premier circuit électronique avec au moins l'autre partie d'antenne sont réalisés de manière appropriée en conséquence.

13. Système selon l'une des revendications précédentes,
**caractérisé par le fait**
**que** l'arbre est un arbre d'entraînement, un arbre entraîné (1) et/ou un arbre intermédiaire.

14. Système selon l'une des revendications précédentes,
**caractérisé par le fait**
**que** les grandeurs physiques mentionnées sont le couple transmis au moyen de l'arbre, le couple transmis à l'arbre tournant et/ou la force axiale et/ou transversale qui apparaît dans ou sur l'arbre.

15. Système selon l'une des revendications précédentes,
**caractérisé par le fait**
**que** le capteur ou au moins des parties du capteur est ou sont monté(es) dans un alésage ou un alésage axial de l'arbre tournant
et **qu'**au moins une partie d'antenne est disposée sur la face intérieure et/ou extérieure de l'arbre tournant
et l'antenne connectée électriquement au premier circuit électronique est disposée de manière stationnaire soit à l'extérieur, soit à l'intérieur de l'alésage axial de l'arbre tournant, cette antenne stationnaire étant positionnée sans contact avec des pièces tournantes comme le capteur ou l'arbre.

16. Système selon l'une des revendications précédentes,
**caractérisé par le fait**
**que** le capteur ou au moins des parties du capteur est ou sont monté(es) dans l'alésage ou alésage axial de l'arbre tournant au moyen d'une cartouche (2)
et **qu'**au moins une partie d'antenne est disposée sur la face extérieure de l'arbre tournant.

17. Système selon l'une des revendications précédentes,
**caractérisé par le fait**
**que** le capteur ou au moins des parties du capteur est ou sont monté(es) avec au moins une partie d'antenne sur la face intérieure et/ou extérieure de l'arbre tournant.

18. Système selon l'une des revendications précédentes,
**caractérisé par le fait**
**que** le capteur ou au moins une de ses parties est réalisé(e) sous forme de surface plane et la direction normale à la surface est au moins partiellement radiale.

19. Système selon l'une des revendications précédentes,
**caractérisé par le fait**
**que** l'arbre tournant est logé dans au moins un palier qui est monté dans un boîtier d'un dispositif, d'un réducteur ou d'un moteur.

20. Système selon l'une des revendications précédentes,
**caractérisé par le fait**
**qu'**au moins une partie d'antenne stationnaire est disposée sur le palier, le dispositif, le réducteur ou le moteur.

21. Système selon l'une des revendications précédentes,
**caractérisé par le fait**
**que** le capteur est réalisé sous forme de surface plane et il existe dans la surface deux directions d'orientation, en particulier perpendiculaires entre elles, de manière qu'il comprenne des moyens pour détecter la compression et l'allongement dans une ou les deux de ces directions d'orientation.

22. Système selon l'une des revendications précédentes,
**caractérisé par le fait**
**que** le capteur, des parties du capteur, la ou les plaquettes de capteur (91), la cartouche de capteur (2) et/ou la pièce intermédiaire (92) est ou sont collé(s).

23. Système selon l'une des revendications précédentes,
**caractérisé par le fait**
**que** l'arbre présente des secteurs d'arbre de grands et petits diamètres, un ou plusieurs capteurs étant montés ou collés sur et/ou entre des secteurs d'arbre de grand diamètre.

24. Procédé de commande de processus pour un système selon l'une des revendications précédentes, dans lequel
sur un entraînement comprenant réducteur et moteur, on mesure en tant que grandeur physique le couple, la force axiale et/ou transversale, la déformation sur un axe ou sur un arbre tournant ou sur une pièce tournante au moyen d'un capteur entraîné en rotation,
au moins le capteur, un premier circuit électronique et des composants du réducteur et/ou du moteur formant un système de mesure de la grandeur physique qui comprend au moins aussi un axe ou un arbre tournant, une antenne entraînée en rotation et une antenne stationnaire,
- le capteur est alimenté en énergie sans contact pour effectuer la mesure,
- le résultat de mesure est transmis sans contact en tant qu'information du capteur à un premier circuit électronique stationnaire avec une antenne,
- et le processus est influencé et/ou commandé en fonction de cette mesure.

25. Procédé selon la revendication 24,
**caractérisé par le fait**
**que** le premier circuit électronique est connecté via un réseau à d'autres participants ou un bus de terrain à d'autres circuits électroniques et/ou participants au bus de terrain tels qu'un ordinateur central.

26. Procédé selon la revendication 24,
**caractérisé par le fait**
**qu'**un arrêt d'urgence ou une réaction d'urgence est déclenché(e) en cas de dépassement de valeurs critiques de la grandeur physique mentionnée.

27. Procédé selon la revendication 24,
**caractérisé par le fait**
**que** l'antenne tournante est connectée électriquement à un capteur SAW et montée sur un arbre tournant directement on en étant intégrée dans un composant tournant avec l'arbre et l'antenne stationnaire est connectée électriquement à un premier circuit électronique et intégrée dans un composant qui est conçu de manière appropriée pour émettre et/ou recevoir une haute fréquence, en particulier de 100 MHz à 10 GHz.

28. Procédé selon la revendication 24,
**caractérisé par le fait**
**que** le premier circuit électronique stationnaire échange au moins chaque fois de façon unidirectionnelle, au moins par moments, de l'énergie et des informations avec ledit au moins un capteur au moyen d'ondes électromagnétiques et/ou de trains d'ondes électromagnétiques.

29. Procédé selon la revendication 24,
**caractérisé par le fait**
**que** le premier circuit électronique stationnaire émet et reçoit des trains d'ondes radar.

30. Procédé selon la revendication 24,
**caractérisé par le fait**
**que** l'information correspondant aux valeurs saisies est contenue dans les trains d'ondes radar ou échos radar renvoyés par le capteur SAW.

31. Procédé selon la revendication 24,
**caractérisé par le fait**
**que** le capteur fonctionne de manière passive.

32. Procédé selon la revendication 24,
**caractérisé par le fait**
**que** le capteur répond à des trains d'ondes électromagnétiques incidents par des trains d'ondes électromagnétiques retardés dans le temps, le retard de temps dépendant des valeurs des grandeurs physiques mentionnées ou de leur variation.
